# EUROPÄISCHE PATENTSCHRIFT

(11) **EP 3 546 468 B1**
(45) Veröffentlichungstag und Bekanntmachung des Hinweises auf die Patenterteilung: **12.08.2020**
(21) Anmeldenummer: 18164578.9
(22) Anmeldetag: 28.03.2018
(51) Int. Cl.: C07F 7/18

(54) **VERFAHREN ZUR HERSTELLUNG ALKOXYSILANGRUPPEN-HALTIGER ISOCYANATE**
METHOD FOR PRODUCING ALKOXYSILANE GROUP-CONTAINING ISOCYANATES
PROCÉDÉ DE PRODUCTION D'ISOCYANATES CONTENANT DES GROUPES ALCOXYSILANE

(43) Veröffentlichungstag der Anmeldung: 02.10.2019
(73) Patentinhaber: Evonik Operations GmbH, 45128 Essen (DE)
(72) Erfinder: KRECZINSKI, Manfred, 44652 Herne (DE); KOHLSTRUK, Stephan, 45966 Gladbeck (DE); HOPPE, Dirk, 48301 Nottuln (DE); SPYROU, Emmanouil, 46514 Schermbeck (DE)
(74) Vertreter: Evonik Patent Association

(56) Entgegenhaltungen:
- DE-A1-102012 219 324

## Beschreibung

Die Erfindung betrifft ein Verfahren zur Herstellung Alkoxysilangruppen-haltiger Isocyanate.

Alkoxysilangruppen-haltige Isocyanate sind als heterofunktionelle Bausteine vielseitig einsetzbar und können beispielsweise Anwendung in Beschichtungen, Dichtstoffen, Klebstoffen und Elastomer-Materialien finden, ohne allerdings auf diese Einsatzfelder beschränkt zu sein.

Verfahren zur Herstellung von Alkoxysilangruppen-haltigen Isocyanaten sind bekannt. So können sie beispielsweise durch Umsetzung von Alkoxysilanoalkylaminen mit Phosgen in Gegenwart tertiärer Amine erhalten werden (DE 35 44 601 C2, US 9,309,271 B2), wobei allerdings neben der Toxizität von Phosgen die Bildung von chlorhaltigen Nebenprodukten und Salzen von Nachteil ist. Alternativ kann der Zugang zu Alkoxysilangruppen-haltigen Isocyanaten auch erschlossen werden durch Hydrosilylierung von Olefingruppen-haltigen Isocyanaten in Gegenwart von Edelmetallkatalysatoren (EP 0 709 392 B1). Nachteile sind hier in der Regel mangelnde Selektivität und hoher Katalysatorbedarf.

Ein weiterer Weg zu Alkoxysilan-haltigen Isocyanaten führt über die Umsetzung von Haloalkylalkoxysilanen mit Metallcyanaten unter Ausbildung von Alkoxysilanoalkylurethanen und anschließender thermischer Spaltung der Urethane unter Freisetzung der korrespondierenden Isocyanate (US 3,821,218 A, US 3,598,852 A, DE 35 24 2015 A1). Nachteilig sind hier die Bildung großer Salzmengen und der notwendige Einsatz eines Lösemittels, wobei üblicherweise Dimethylformamid eingesetzt werden muss.

US 5,218,133 A beschreibt einen Weg zur Herstellung von Alkoxysilanoalkylurethanen, der die störende Bildung stöchiometrischer Salzmengen vermeidet. Dazu werden Alkoxysilanoalkylamine in Gegenwart basischer Katalysatoren, insbesondere in Gegenwart von Metallalkoxiden, mit Alkylcarbonaten umgesetzt und die Reaktionsmischung im Anschluss neutralisiert.

DE 10 2012 219 324 A1 offenbart einen Verfahren zur Herstellung Alkoxysilangruppen-haltigen Isocyanats. US 5,393,910 A beschreibt ein Verfahren zur thermischen Spaltung von bevorzugt gemäß

US 5,218,133 A hergestellten Alkoxysilanoalkylurethanen bei hoher Temperatur in der Gasphase. Nachteil dieses Verfahrens ist die Notwendigkeit hochtemperaturbeständigen und somit kostenintensiven Spezialequipments. Zudem wird in Patenten, die sich nicht speziell auf Silanoisocyanate beziehen, berichtet, dass die erforderliche hohe Temperatur zur Reaktorverkokung führt. Dies ist von Nachteil, weil die Anlagenverfügbarkeit leidet.

Alternativ zur Urethanspaltung in der Gasphase kann die thermisch induzierte Freisetzung von Alkoxysilangruppen-haltigen Isocyanaten auch verdünnt in inerten Lösemitteln durchgeführt werden (s. US 5,886,205 A, US 6,008,396 A). Dabei wird das Alkoxysilanoalkylurethan zum inerten Lösemittel addiert und die Temperatur des Lösemittels so hoch gewählt, dass einerseits die Urethanspaltung gefördert, andererseits aber unerwünschte Nebenreaktionen möglichst vermieden werden. US 5,886,205 A offenbart für die batchweise oder kontinuierlich durchführbare Reaktion pH-Werte von weniger als 8, Temperaturen von nicht mehr als 350 °C und einen Katalysator umfassend mindestens ein Metall ausgewählt aus Sn, Sb, Fe, Co, Ni, Cu, Cr, Ti und Pb oder mindestens eine Metallverbindung umfassend diese Metalle. Nachteilig ist der im Vergleich zur Gasphasenspaltung erforderliche Aufwand zur Lösemittelaufreinigung und der unvermeidbare Lösemittelverlust.

EP 1 010 704 A2 offenbart ein ein- oder zweistufiges Verfahren zur Herstellung von Alkoxysilanoalkylurethanen aus Alkoxysilanoalkylaminen, Harnstoff und Alkohol. Die Alkoxysilanoalkylurethane können thermisch zu Alkoxysilangruppen haltigen Isocyanaten gespalten werden. Die Beispiele der genannten Anmeldung offenbaren ein Verfahren, bei dem zunächst 3-Aminopropyltriethoxysilan mit Harnstoff und Ethanol umgesetzt werden und entstehender Ammoniak sowie nicht umgesetzter Ethanol, Leichtsieder und höhermolekulare Verbindungen abgetrennt werden. Das erhaltene Carbamat wird dann in einer Spaltungs-und Rektifikationsapparatur thermisch gespalten, wobei das freigesetzte Ethanol am Kopf der Kolonne abgezogen wird, das entstehende 3-Isocyanatopropyltriethoxysilan über den Seitenabzug entnommen wird und ein Teil des Sumpfes der Rektifikationseinheit, der nicht umgesetztes Urethan enthält, in die Carbamatherstellung zurückgeführt wird. Das Verfahren hat jedoch den Nachteil, dass die im Spaltsumpfmaterial enthaltenen Hochsieder zu Ablagerungen in der Apparatur führen können und die Ausbeute der Carbamatsynthese und somit die Ausbeute über das gesamte Verfahren negativ beeinflusst. Weiterhin erhöht die Rückführung in die Carbamatsynthese unnötig den Aufwand zur destillativen Reinigung des Carbamats, was sich auch in erhöhten Kosten für Investment und Energie ausdrückt. Weiterhin wird der im Stoffstrom des Spaltsumpfes enthaltene Wertstoffanteil nicht optimal im Sinne einer Ausschöpfung des Ausbeutepotenzials ausgenutzt.

Es ist somit die Aufgabe der vorliegenden Erfindung, die vorgenannten Nachteile des Standes der Technik zu vermeiden. Insbesondere ist es Aufgabe der vorliegenden Erfindung, ein Verfahren zur Herstellung von Alkoxysilangruppen-haltigen Isocyanaten aus Alkoxysilanoalkylamin, Harnstoff und Alkohol bereitzustellen, das verbesserte Ausbeuten zeigt.

Überraschend wurde nun festgestellt, dass die vorliegende Aufgabe gelöst werden kann durch das erfindungsgemäße Verfahren zur Herstellung Alkoxysilangruppen-haltigen Isocyanats, bei dem in der Abfolge der Schritte A) bis D)
A) Alkoxysilanoalkylamin mit Harnstoff in Gegenwart eines Alkohols optional in Gegenwart mindestens eines Katalysators zu Alkoxysilanoalkylurethan umgesetzt,
B) gleichzeitig oder aufeinander folgend
   - falls eingesetzt, der Katalysator abgetrennt und/oder deaktiviert, sowie
   - Leichtsieder, Mittelsieder, und/oder Hochsieder entfernt
C) gereinigtes Alkoxysilanoalkylurethan unter Freisetzung von Alkoxysilangruppen-haltigem Isocyanat und Nebenprodukt und unter Verbleib von Sumpfmaterial thermisch gespalten und
D) Alkoxysilangruppen-haltiges Isocyanat und Nebenprodukt voneinander und vom Sumpfmaterial getrennt und aufgefangen wird,
bei dem in Schritt C)
i) das Sumpfmaterial ganz oder partiell aus der Spaltapparatur ausgeschleust,
ii) thermisch behandelt und/oder aufgereinigt und/oder in Gegenwart von Alkohol einer Nachbehandlung unterzogen und
iii) das entnommene Material nach thermischer Behandlung und/oder Aufreinigung und/oder Nachbehandlung in Schritt B) oder C) erneut zugeführt wird.

Unter einem Verfahren zur Herstellung Alkoxysilangruppen-haltigen Isocyanats aus Alkoxysilanoalkylamin mit Harnstoff in Gegenwart eines Alkohols ist vorliegend hier und im Folgenden ein Verfahren zu verstehen, bei dem aus einem oder mehreren Alkoxysilanolalkylaminen, Harnstoff und einem oder mehreren Alkoholen zunächst unter Freisetzung von Ammoniak ein oder mehrere Alkoxysilanoalkylurethane hergestellt werden, die nachfolgend thermisch zu einem oder mehreren Alkoxysilangruppen-haltigen Isocyanaten und einem oder mehreren Nebenprodukten, insbesondere den ursprünglich eingesetzten Alkoholen, umgesetzt werden. Bevorzugt ist das erfindungsgemäße Verfahren ein Verfahren, bei dem aus einem Alkoxysilanolalkylamin, Harnstoff und einem Alkohol unter Freisetzung von Ammoniak zunächst ein Alkoxysilanoalkylurethan hergestellt wird, das nachfolgend thermisch zu einem Alkoxysilangruppen-haltigen Isocyanat und dem ursprünglich eingesetzten Alkohol umgesetzt wird.

Dadurch, dass in Schritt C) das Sumpfmaterial abgeführt, thermisch behandelt und/oder aufgereinigt und/oder im Sumpfmaterial vorhandene Isocyanate erneut in Gegenwart von Alkohol einer Nachbehandlung unterzogen werden, wird der Hochsiederanteil im Sumpfmaterial erniedrigt und/oder der Wertstoffanteil erhöht. Überaschenderweise führt die Recyclierung des abgeführten, thermisch behandelten und/oder aufgereinigten und/oder reurethanisierten Stroms in Schritt B) oder C) des Prozesses zu einer Erhöhung der Ausbeute. Weiterhin ermöglicht diese Verfahrensführung eine kontinuierliche Verfahrensführung. Bevorzugt kann somit Ausschleusung, thermische Behandlung und/oder Aufreinigung und/oder Nachbehandlung mit Alkohol und Zuführung des Sumpfmaterials kontinuierlich geführt werden. Besonders bevorzugt wird das Sumpfmaterial abgeführt, aufgereinigt und im Sumpfmaterial vorhandene Isocyanate erneut mit Alkohol behandelt und das aufgereinigte Sumpfmaterial wieder in Schritt B) oder C) zugeführt.

Die einsetzbaren Alkoxysilanolamine können im Prinzip eine beliebige Strukturformel haben. So können sie z.B. über zwei Aminogruppen verfügen oder auch zwischen der Alkoxysilanfunktion der Aminogruppe eine oder mehrere Ester- oder Ethergruppen aufweisen. Bevorzugt hat das in Schritt A) eingesetzte Alkoxysilanoalkylamin jedoch die Formel (1)

R³ₘ(OR²)₃₋ₘSi-R¹-NH₂ (1)

wobei R³, R² und R¹ unabhängig voneinander gleiche oder verschiedene Kohlenwasserstoffreste mit 1-6 C-Atomen bedeuten, wobei diese linear, verzweigt oder cyclisch sein können, und m gleich 0 - 2 bedeutet. Bevorzugt ist m gleich 0 und R¹ gleich Methyl oder Propyl, und R² gleich Methyl oder Ethyl.

Bevorzugt ist der eingesetzte Harnstoff unkonditioniert. Das heißt, er darf nicht mit anorganischen Substanzen oberflächenbehandelt sein (beispielsweise mit Talkum, Bentonit, Kieselgur, Diatomeen, Kaolin, anderen als Antibackmittel Anwendung findenden silikatischen Stoffen, Schwefel oder Öl), aus einer mit Formaldehyd (einschließend Paraformaldehyd) behandelten Harnstoffschmelze stammen oder mit Formaldehyd (einschließend Paraformaldehyd) oberflächenbehandelt sein. Bevorzugt beträgt die maximale Formadehydkonzentration (auch Paraformaldehyd) des eingesetzten Harnstoffs weniger als 0,10 Gew.-%, vorzugsweise weniger als 0,01 Gew.-% und besonders bevorzugt weniger als 0,001 Gew.-%.

Die übliche Handelsform großtechnisch hergestellten Harnstoffs sind Prills, d. h. kleine Kügelchen mit einem Durchmesser von 1 - 3 mm. Kristalliner Harnstoff neigt auch bei sehr niedrigen Wassergehalten von < 0,1 % so stark zum Verbacken, dass er für eine lose Lagerung in großen Mengen nicht geeignet ist. Eine Verbesserung der Lagereigenschaften von Harnstoff-Prills, die beispielsweise bei Silolagerung von großen Mengen notwendig ist, wird durch eine nachträgliche Oberflächenbehandlung der Prills mit Puderstoffen erzielt, insbesondere mit Talkum, Bentonit, Kieselgur, Diatomeen, anderen silikatischen Stoffen, Schwefel und auch durch Aufdüsen von geringen Mengen Öl.

Heute setzt die Harnstoffindustrie der Harnstoffschmelze vor dem Verprillen bevorzugt Formaldehyd bis zu 0,6 Gew.-% (s. auch Ullmann's Encyclopedia of Industrial Chemistry, Release 2006, 7^{th} Edition) zu, um die Stabilität der Prills zu erhöhen. Diese Maßnahme dient zur Vorbeugung gegen Zerfall und Verbacken beim Transport und zur Verbesserung der Lagerstabilität.

Harnstoff aus einer mit Formaldehyd (auch Paraformaldehyd) vor dem Prillen oder Granulieren behandelten Harnstoffschmelze und mit Formaldehyd (auch Paraformaldehyd) oberflächenbehandelter Harnstoff, ebenfalls eine industriell praktizierte Maßnahme zur Verbesserung der Lagereigenschaft der Prills, führt, wie z.B. auch bei dem in EP 1 010 704 A2 beschriebenen Verfahren bei beiden Stufen, Urethansynthese und Isocyanatfreisetzung, zur Bildung unerwünschter Nebenprodukte. Die gebildeten Nebenprodukte sind auf der Stufe der Alkoxysilanoalkylurethane auch mit aufwendiger Reinigungsprozeduren nur unzureichend abtrennbar.

In den Aggregaten zur thermischen Spaltung des Alkoxysilanoalkylurethans zum Alkoxysilangruppen haltigen Isocyanat führen sowohl die nicht quantitativ abgetrennten Nebenprodukte aus der Urethanstufe selbst, als auch ein daraus neu generiertes Nebenproduktspektrum zu einer Verunreinigung des Zielproduktes, welche sich nachteilig auf die Produktfarbe und Lagerstabilität auswirkt. Die Effekte lassen sich durch eine Kombination von erhöhtem Destillationsaufwand und großzügiger Vorlaufabtrennung abmildern. In dem Fall ergeben sich als Nachteile jedoch ein erhöhter Energiebedarf, erhöhte Investmentkosten für den Destillationsaufbau sowie eine Reduzierung der möglichen Ausbeute und damit Effizienz im Hinblick auf eine maximale Ausnutzung der Einsatzstoffe.

Der durch den Einsatz unkonditionierten Harnstoffs begründete Vorteil besteht also darin, dass eine Abtrennung des üblicherweise generierten Nebenproduktspektrums mit den beschriebenen Destillations- und Rektifikationseinrichtungen zur Reinigung der Alkoxysilangruppen haltigen Isocyanate unterbleiben kann und zu Produktqualitäten führt, deren anwendungstechnisches Eigenschaftsprofil einen Einsatz in weitere Veredelungsstufen ohne zusätzliche Aufarbeitungsschritte möglich macht.

Die Abtrennung des in der Alkoxysilanoalkylurethanstufe aus Formaldehyd und/oder aus formaldehydhaltigen Komponenten des eingesetzten unkonditionierten Harnstoffs bei der Reaktion mit Alkoxysilanoalkylaminen in Gegenwart von Alkoholen generierten Nebenproduktspektrums ist nicht erforderlich und somit der Einsatz einer zusätzlichen Destillation nicht nötig. Aufgrund der Vermeidung von Nebenprodukten in der Alkoxysilanoalkylurethanstufe wird zusätzlich anschließend ein weiteres Nebenproduktspektrum in der thermischen Spaltung der Alkoxysilanoalkylurethane zu Alkoxysilangruppen haltigen Isocyanaten vermieden. Auch in dieser Stufe ist der zusätzliche destillative Aufwand in Kombination mit einer großzügigen Vorlaufabtrennung zur Erzielung der gewünschten Isocyanatreinheiten überflüssig.

Der erfindungsgemäße Einsatz von unkonditioniertem Harnstoff vermindert somit den Energiebedarf, erhöht die Gesamtverfahrensausbeute und steigert die Wirtschaftlichkeit des Verfahrens.

Der unkonditionierte Harnstoff kann unabhängig von der Darreichungsform eingesetzt werden. Bevorzugt wird der unkonditionierte Harnstoff als Prill, Granulat, Kristall, Schmelze oder Lösung eingesetzt.

Der eingesetzte Alkohol hat bevorzugt die Formel

R⁴⁻OH (2)

wobei R⁴ ein linearer, verzweigter oder cyclischer Kohlenwasserstoffrest mit 1 - 6 C-Atomen ist. Weiter bevorzugt entspricht R⁴ dem Rest R² in Formel (2). Bevorzugte Alkohole sind Methanol, Ethanol, 1-Propanol, 1-Butanol, 2-Butanol, 1-Hexanol oder Cyclohexanol.

Die Synthese des Urethans aus Alkoxysilanoalkylamin, Harnstoff und Alkohol kann in An- oder Abwesenheit mindestens eines Katalysators erfolgen. Bevorzugt wird das erfindungsgemäße Verfahren ohne einen Katalysator durchgeführt, da so eine aufwändige Entfernung des Katalysators vermieden werden kann. Bevorzugter Gegenstand der vorliegenden Erfindung ist somit ein Verfahren zur Herstellung Alkoxysilangruppen-haltigen Isocyanats, bei dem in der Abfolge der Schritte A) bis D)
A) Alkoxysilanoalkylamin mit Harnstoff in Gegenwart eines Alkohols zu Alkoxysilanoalkylurethan umgesetzt,
B) gleichzeitig oder aufeinander folgend Leichtsieder, Mittelsieder, und/oder Hochsieder entfernt C) gereinigtes Alkoxysilanoalkylurethan unter Freisetzung von Alkoxysilangruppen-haltigem Isocyanat und Nebenprodukt und unter Verbleib von Sumpfmaterial thermisch gespalten und D) Alkoxysilangruppen-haltiges Isocyanat und Nebenprodukt voneinander und vom Sumpfmaterial getrennt und aufgefangen wird,
bei dem in Schritt C)
i) das Sumpfmaterial ganz oder partiell aus der Spaltapparatur ausgeschleust,
ii) thermisch behandelt und/oder aufgereinigt und/oder in Gegenwart von Alkohol einer Nachbehandlung unterzogen und
iii) das entnommene Material nach thermischer Behandlung und/oder Aufreinigung und/oder Nachbehandlung in Schritt B) oder C) erneut zugeführt wird.

Dennoch kann zur Erhöhung der Reaktionsgeschwindigkeit mindestens ein Katalysator eingesetzt werden. Als Katalysatoren eignen sich bevorzugt anorganische oder organische Verbindungen, die ein oder mehrere, vorzugsweise ein Kation von Metallen der Gruppen IA, IB, IIA, IIB, IIIA, IIIB, IVA, IVB, VA, VB, VIB, VIIB und VIIIB des Periodensystems, definiert gemäß Handbook of Chemistry and Physics 14^{th} Edition, publiziert von Chemical Rubber Publishing Co. 2310 Superior Ave. N.E. Cleveland, Ohio, enthalten. Bevorzugte Katalysatoren sind Halogenide (insbesondere Chloride und Bromide), Sulfate, Phosphate, Nitrate, Borate, Alkoholate, Phenolate, Sulfonate, Oxide, Oxidhydrate, Hydroxide, Carboxylate, Chelate, Carbonate und Thio- oder Dithiocarbamate dieser Kationen. Weiter bevorzugte Katalysatoren weisen Kationen folgender Metalle auf: Lithium, Natrium, Kalium, Magnesium, Calcium, Aluminium, Gallium, Zinn, Blei, Bismut, Antimon, Kupfer, Silber, Gold, Zink, Quecksilber, Cer, Titan, Vanadium, Chrom, Molybdän, Mangan, Eisen, Kobalt und Nickel. Ganz besonders bevorzugte Katalysatoren sind die folgenden Verbindungen: Lithiumethanolat, Lithiumbutanolat, Natriummethanolat, Kalium-tert.-butanolat, Magnesiumethanolat, Calciummethanolat, Zinn-(II)-chlorid, Zinn-(IV)-chlorid, Bleiacetat, Aluminiumtrichlorid, Bismuttrichlorid, Kupfer-(II)-acetat, Kupfer-(II)-chlorid, Zinkchlorid, Zinkoctoat, Titantetrabutanolat, Vanadiumtrichlorid, Vanadiumacetonylacetat, Mangan-(ll)-acetat, Eisen-(ll)-acetat, Eisen-(lll)-acetat, Eisenoxalat, Cobaltchlorid, Cobaltnaphthenat, Nickelchlorid und Nickelnaphthenat. Die Katalysatoren können gegebenenfalls auch in Form ihrer Ammoniakate zu Einsatz kommen.

Zur Herstellung des Alkoxysilanoalkylurethans in der Reaktionsstufe A) wird Alkoxysilanoalkylamin mit Harnstoff und Alkohol bevorzugt in einem Molverhältnis dieser drei Komponenten von 1 : 1,01 : 3,0 bis 1 : 1,5 : 10, vorzugsweise 1 : 1,02 : 4 bis 1 : 1,3 : 9 eingesetzt. Bevorzugt wird die Umsetzung in Abwesenheit oder Gegenwart von Katalysatoren bei Reaktionstemperaturen von 140 - 270 °C, vorzugsweise 160 - 250 °C, und unter einem Druck, der in Abhängigkeit vom eingesetzten Alkohol zwischen 2-80 bar, vorzugsweise 5-40 bar beträgt, innerhalb von 2 bis 20 Stunden, vorzugsweise 4 - 9 Stunden, durchgeführt. Neben Harnstoff können weiterhin auch Dialkylcarbonate und/oder Carbamidsäurealkylester als Carbonylierungsmittel zugegen sein. Bevorzugt wird jedoch ausschließlich Alkoxysilanoalkylamin, Harnstoff und Alkohol miteinander umgesetzt.

Im Zuge der Umsetzung des Reaktionsgemisches in Schritt A) wird Ammoniak freigesetzt. Bevorzugt wird dieser bereits bei der Reaktion aus dem Reaktionsgleichgewicht entfernt. Beim Austrag des Ammoniaks aus dem Reaktor ist darauf zu achten, dass die Wandtemperaturen des Reaktors und des Austragsrohres oberhalb von 60°C liegen, damit eine Belegung durch Ammoniumcarbaminat, welches in minimalen Mengen aus Ammoniak und Kohlendioxid durch Zersetzung von Harnstoff gebildet wird, vermieden werden kann. Es hat sich beispielsweise bewährt, die Umsetzung in einem Druckdestillationsreaktor durchzuführen, wobei das Reaktionsgemisch im Gegenstrom zu im Sumpf eingebrachten Alkoholbrüden geführt wird und auf diese Weise eine derartig intensive Durchmischung der Flüssigkeit auf den Böden, die praktisch jeweils einer Kaskadenstufe entsprechen, erfolgt. Das am Kopf abgezogene, dampfförmige Gemisch aus Alkohol und Ammoniak kann, vorzugsweise unter dem Druck des Druckdestillationsreaktors und ohne es vorher zu kondensieren, in eine Destillationskolonne geführt werden, um Ammoniak freien Alkohol zu gewinnen, der in den Sumpf des Druckdestillationsreaktors und der Kolonne zurückgeführt wird. Um eine Belegung des Rückflusskondensators mit Ammoniumcarbaminat zu verhindern, lässt man in diesem zur Einstellung der Temperatur am Kopf auf mindestens 60 °C einen entsprechenden Anteil an Alkohol zu.

Die Umsetzung kann in einem Batchreaktor, einer kontinuierlich betriebenen Rührkesselkaskade, oder einem Druckdestillationsreaktor erfolgen. Vorzugsweise wird sie in einem Druckdestillationsreaktor durchgeführt.

In Schritt B) wird gleichzeitig oder aufeinander folgend der Katalysator (falls eingesetzt) abgetrennt und/oder deaktiviert, und es werden Leichtsieder, Mittelsieder und/oder Hochsieder entfernt.

Wird ein Katalysator eingesetzt, kann dieser zunächst abgetrennt und/oder deaktiviert und dann Leichtsieder, Mittelsieder und/oder Hochsieder entfernt werden. Auch können zunächst Leichtsieder, Mittelsieder und/oder Hochsieder entfernt und dann der Katalysator abgetrennt und/oder deaktiviert werden. Möglich ist auch, beide Teilschritte gleichzeitig durchzuführen. Bevorzugt wird jedoch zunächst der Katalysator deaktiviert und dann werden Leichtsieder, Feststoffe, Salzfrachten und/oder Hochsieder entfernt.

Insbesondere, wenn es sich bei dem Katalysator um ein Metallalkoholat oder Metallphenolat handelt, kann dieser bevorzugt zunächst durch Zugabe einer Säure deaktiviert, wobei idealerweise mindestens eine äquimolare Menge an Säure zum Einsatz gelangt.

Der Katalysator bzw. deaktivierte Katalysator wird bevorzugt zusammen mit den Hochsiederkomponenten abgetrennt.

Bevorzugt handelt es sich bei Leichtsiedern um Alkohol und um ggf. noch anwesenden Ammoniak. Bevorzugt handelt es sich bei Mittelsiedern um weiteren Alkohol sowie ggf. anwesende Dialkylcarbonate und Carbamidsäurealkylester. Hochsieder sind bevorzugt ungewünschte Nebenprodukte der Urethansynthese. Die Abtrennung kann zwei- oder dreistufig erfolgen. Vorzugsweise werden Leichtsieder über eine Entspannungsverdampfung abgetrennt und Mittel- und Hochsieder über eine oder zwei Stufen in einem Fallfilmverdampfer und/oder Dünnschichtverdampfer. Bevorzugt wird die Entfernung der Leichtsieder, Mittelsieder und/oder Hochsieder in drei separaten Teilschritten durchgeführt. Weiter bevorzugt können die Leichtsieder durch Entspannungsverdampfung, die Mittelsieder über eine erste Fallfilmverdampfung oder Dünnschichtverdampfung und die Hochsieder über eine Kurzwegverdampfung oder eine (ggf. weitere) Dünnschichtverdampfung abgetrennt werden. Dabei werden vorzugsweise zunächst die Leichtsieder abgetrennt, dann die Mittelsieder und schließlich die Hochsieder.

Die Abtrennung der Leichtsieder erfolgt bevorzugt durch eine Entspannung der Reaktionsmischung vom Druckniveau der Reaktionsstufe A) auf einen Druck von 1 - 500 mbar, vorzugsweise 2 - 250 mbar. Auf diese Weise erfolgt eine Auftrennung in gasförmige Brüden, die die überwiegende Alkoholmenge enthalten, und in einen flüssigen Austrag, bestehend bevorzugt aus Alkohol und Dialkylcarbonat.

Die Abtrennung ggf. weiterer noch anwesender Leichtsieder und der Mittelsieder im flüssigen Austrag erfolgt bevorzugt bei 70-160°C, bevorzugt 90-140°C, und einem Druck von 0,1 - 40 mbar, vorzugsweise 1-20 mbar. Bevorzugt kann ein Fallfilm- oder Dünnschichtverdampfer eingesetzt werden.

Die entfernten Leicht- und Mittelsieder, insbesondere der entfernte Alkohol sowie ggf. anwesende carbonylierende Mittelsieder wie Dialkylcarbonate und/oder Carbamidsäurealkylester, können bevorzugt in die Reaktionsstufe A) zurückgeführt werden. Weiter bevorzugt können diese nach Abtrennung und vor Rückführung destillativ aufgereinigt werden.

Die Abtrennung der Hochsieder erfolgt bevorzugt über eine Kurzwegverdampfung oder eine Dünnschichtverdampfung, ganz besonders bevorzugt über eine Dünnschichtverdampfung, bei einem Druck von 1 - 30 mbar, vorzugsweise 2 - 20 mbar, einer Temperatur von 80 - 220 °C, bevorzugt 100 - 200 °C,und einem Schnittverhältnis Destillat/Rückstand von größer 80 Gew.-% zu 20 Gew.-%, vorzugsweise größer 85 Gew.-% zu 15 Gew.-%, besonders bevorzugt größer 90 Gew.-% zu 10 Gew.-%.

In der thermischen Spaltung C) entsteht Alkoxysilangruppen-haltiges Isocyanat und Nebenprodukt, bevorzugt Alkohol. Bevorzugt wird die thermische Spaltung ohne Lösemittelzugabe durchgeführt.

Die thermische Spaltung in Schritt C) wird bevorzugt in Gegenwart eines Katalysators lösemittelfrei bei einer Temperatur von 140 bis 280°C, vorzugsweise 160 bis 260 °C, und unter einem Druck von 0,5 - 200 mbar, vorzugsweise 1,0 - 100 mbar, durchgeführt. Die Katalysatorkonzentration beträgt bevorzugt 0,5 - 250 ppm, vorzugsweise 1 - 100 ppm.

Bei der thermischen Spaltung wird das Sumpfmaterial ganz oder partiell aus der Spaltapparatur ausgeschleust. Bevorzugt wird ein Teil des Reaktionsgemisches, bevorzugt 1 bis 90 Gew.-% bezogen auf den Feed, vorzugsweise 5 bis 60 Gew.-% bezogen auf den Feed, ständig aus dem Sumpf ausgeschleust. Entsprechend werden bevorzugt entsprechende Mengen an Sumpfmaterial aus der Spaltapparatur ausgeschleust.

Die thermische Spaltung erfolgt dabei bevorzugt partiell, d.h. der Umsatz von Produkt aus Schritt B)/Destillat zu Alkoxysilangruppen-haltigem Isocyanat wird frei gewählt und liegt üblicherweise in einem Bereich von 10 - 95 Gew.%, vorzugsweise 20 - 85 Gew.% der zugeführten Menge (Feed). Bevorzugt wird ein Teil des Reaktionsgemisches, das neben nicht umgesetzten Urethan hochsiedende Nebenprodukte und andere wiederverwertbare und unverwertbare Nebenprodukte enthält, kontinuierlich aus dem Sumpf ausgeschleust. Die Menge der Ausschleusung richtet sich u.a. nach dem gewünschten Umsatz und der gewünschten Kapazität der Spaltreaktion und kann leicht experimentell ermittelt werden. Sie beträgt bevorzugt 1 bis 90 Gew.-%, vorzugsweise 5 bis 60 Gew.-% bezogen auf den Feed.

Als Katalysator zur chemischen Spaltung der Alkoxysilangruppen-haltigen Urethane finden zum Beispiel die Urethanbildung katalysierende anorganische und organische Verbindungen Verwendung. Vorzugsweise werden Chloride des Zinks oder Zinns sowie Zink-, Mangan-, Eisen- oder Cobaltoxide eingesetzt, wobei der Katalysator dem im wesentlichen Urethan enthaltenden Stoffstrom aus dem Reinigungsschritt B), insbesondere dem Stoffstrom aus Schritt B) iv) und ggf. weiteren recyclierten Strömen vor ihrer Zuführung in die Spaltung als 0,01 - 25 Gew.-%ige, vorzugsweise 0,05 - 10 Gew.-%ige Lösung oder Suspension in Alkohol, in einer Menge von 0,5 - 250 ppm, vorzugsweise 1 - 100 ppm, zudosiert wird. Grundsätzlich, aber nicht bevorzugt, kann die Urethanspaltung auch ohne Katalysatorzusatz durchgeführt werden.

Als Spaltvorrichtungen eignen sich bevorzugt zylinderförmige Spaltreaktoren, wie z. B. Röhrenöfen oder vorzugsweise Verdampfer, beispielsweise Fallfilm-, Dünnschicht- oder Bulkverdampfer wie z. B. Robertverdampfer, Herbertverdampfer, Caddle-Typ-Verdampfer, Oskarverdampfer und Heizkerzenverdam pfer.

Prinzipiell geht es darum, die mittlere Verweilzeit der Isocyanatgruppen, die bei der Deblockierung des Alkohols zwangsläufig freigesetzt werden, in der Spaltzone möglichst gering zu halten und so unerwünschte Nebenreaktionen auf ein Minimum zu beschränken.

Bevorzugt wird die Spaltung in einer kombinierten Spalt- und Rektifizierkolonne durchgeführt, die für die Energiezufuhr im Sumpf mit einem Fallfilmverdampfer, im oberen Teil mit einer Einrichtung zum Abzug von Produkt bzw. Rohprodukt und am Kopf mit einem Kondensator für den Rückfluss und den Abzug von Alkohol ausgestattet ist. Optional können im unteren Drittel noch Einrichtungen zum zusätzlichen Energieeintrag installiert sein.

Die bei der thermischen Spaltung gebildeten Spaltprodukte, die sich vor allem aus Alkohol und Alkoxysilangruppen-haltigem Isocyanat zusammensetzen, können bevorzugt durch Rektifikation bei Temperaturen von 140 - 280 °C, vorzugsweise 160 -260 °C, und einem Druck von 0,5 - 200 mbar, vorzugsweise 1 - 100 mbar, in Alkohol und Alkoxysilangruppen-haltiges Isocyanat getrennt werden, wobei das Isocyanat u.a. ggf. noch Anteile am zugrundeliegenden Urethan enthält. Diese Trennung kann beispielsweise in der Spaltkolonne der obengenannten kombinierten Spalt- und Rektifizierkolonne durchgeführt werden.

Das Hochsieder enthaltende Sumpfmaterial der Spaltapparatur wird nach Ausschleusung bevorzugt thermisch behandelt und/oder aufgereinigt und/oder in Gegenwart von Alkohol einer Nachbehandlung unterzogen werden und wird dann bevorzugt in Schritt B) oder C) erneut zugeführt. Damit kann der Hochsiederanteil verringert sowie der Wertstoffanteil der Stoffmischung erhöht werden. Weiterhin wird so eine kontinuierliche Verfahrensführung der Schritte C) und D) ermöglicht. Bislang bestand nur die Möglichkeit, die Schritte A) und B) kontinuierlich zu führen. Somit ermöglicht die erfindungsgemäße Sumpfausschleusung mit Rückführung eine kontinuierliche Verfahrensführung aller Schritte A) bis D). Besonders bevorzugt wird das Sumpfmaterial abgeführt, aufgereinigt und im Sumpfmaterial vorhandene Isocyanate erneut mit Alkohol behandelt und das aufgereinigte Sumpfmaterial wieder in Schritt B) oder C) zugeführt.

Die thermische Nachbehandlung erfolgt bevorzugt bei einer Temperatur von 190 - 290 °C über einen Zeitraum von 0,2 bis 4 h, weiter bevorzugt bei 190 - 250 °C über einen Zeitraum von 0,5 - 1,5 h bei Normaldruck.

Der Aufreinigungsschritt erfolgt bevorzugt destillativ. Dabei wird bevorzugt das ausgeschleuste Sumpfmaterial bei vermindertem Druck und einer Temperatur von 190 - 290 °C so destilliert, dass im Sumpf entstandenes Alkoxysilanoalkylisocyanat und/oder Alkoxysilanoalkylurethan von den Hochsiedern abgetrennt wird. Das erhaltene Destillat kann Schritt B) oder C) des Verfahrens zugeführt werden. Bevorzugt wird das erhaltene Destillat der Kurzweg- oder Dünnschichtverdampfung B) iv) oder der Spaltung C) zugeführt.

Die Sumpfausschleusung aus der Spaltstufe C) enthält neben nicht umgesetzten Urethan zudem hochsiedende Nebenprodukte und andere wiederverwertbare und unverwertbare Nebenprodukte. Der wiederverwertbare Anteil, d.h. der Wertstoffanteil der Stoffmischung - und dadurch die Gesamtausbeute des Verfahrens - kann durch eine gezielte thermische Nachbehandlung in Kombination mit einer destillativen Aufreinigung des Materials erhöht werden. Das Material wird in einen Wertstoff- und eine Abfallstrom aufgetrennt, wobei der an Hochsiedern reiche Abfallstrom aus dem Prozess ausgeschleust und verworfen bzw. recycliert wird.

Das ausgeschleuste Sumpfmaterial umfassend Alkoxysilanoalkylisocyanat und/oder Alkoxysilanoalkylurethan kann weiter bevorzugt mit oder ohne vorhergehenden Aufreinigungsschritt einer ggf. weiteren Nachbehandlung unterzogen werden, um den Wertstoffanteil der Stoffmischung zu erhöhen. Dazu wird das ggf. destillierte Sumpfmaterial in Gegenwart eines Alkohols der Formel R⁴OH mit R⁴ = linearer, verzweigter oder cyclischer Kohlenwasserstoffrest mit 1 - 6 C-Atomen, bevorzugt dem in der Spaltung C) entstandenen, recyclierten Alkohol, bei 25 - 100°C und einem Druck von 0,5 - 20 bar, bevorzugt 1-15 bar in Gegenwart oder Abwesenheit eines Katalysators umgesetzt. Als Katalysatoren kommen alle Kontakte in Frage, die die NCO/OH-Reaktion fördern, z. B. Zinnoctoat, Dibutylzinnlaurat, Zinndichlorid, Zinkdichlorid oder Triethylamin. Das Molverhältnis von NCO-Gruppen und OH-Gruppen beträgt bevorzugt bis zu 1 : 100, vorzugsweise bis zu 1 : 60 und besonders bevorzugt bis zu 1 : 30. Die Reaktion kann in einem Batchreaktor, einer Kaskade oder auch in einem Rohrreaktor in Abwesenheit oder Gegenwart eines Katalysators durchgeführt werden. Bevorzugt wird die Reaktion in einer Kaskade oder in einem Rohrreaktor durchgeführt. Dabei werden entstandene Alkoxysilanoalkylisocyanate zu den entsprechenden Urethanen umgesetzt ("Reurethanisierung") und recycliert.

Die Schritte thermische Nachbehandlung und Auftrennung in Wertstoff- und Abfallstrom und Reurethanisierung können nacheinander oder parallel durchgeführt werden. So eignet sich für die thermische Nachbehandlung beispielsweise ein Batchreaktor, wobei die Auftrennung der Komponenten parallel und/oder im Anschluss in einer Destillationskolonne oder mit Hilfe eines Fallfilm-, Kurzweg- oder Dünnschichtverdampfers erfolgen kann, beispielsweise auch durch Rückführung in die Hochsiederabtrennung B) iv). Weniger bevorzugt kann die Trennoperation auch durch Extraktion erfolgen. Alternativ können auch die Schritte in einem Fallfilm-, Dünnschicht- oder Kurzwegverdampfer erfolgen und es können auch mehrere hintereinander- oder parallel geschaltete Verdampfer zum Einsatz kommen.

Die thermische Nachbehandlung kann in Gegenwart oder Abwesenheit typischer Urethanisierungskatalysatoren erfolgen. Es kann auch vollständig auf die thermische Nachbehandlung verzichtet werden, man verschenkt durch diese Maßnahme jedoch Ausbeutepotenzial.

Bei gegebener Kapazität sind für eine möglichst optimale Erhöhung des Wertstoffanteils u.a. die Parameter Verweilzeit und Temperatur der thermischen Nachbehandlung entscheidend, deren Optimum von Dimensionierung und Grundaufbau der verfahrenstechnischen Konfiguration abhängen und sich vom Fachmann leicht experimentell ermitteln lassen.

In einer besonders bevorzugten erfindungsgemäßen Variante wird die Sumpfausschleusung aus der Spaltstufe C) einer thermischen Nachbehandlung im Rührkessel mit anschließender aufgesetzter Destillationskolonne bei 190 - 290 °C, vorzugsweise 215 - 265 °C, bei vermindertem Druck unterzogen, und im Anschluss in einen Dünnschicht- bzw. Kurzwegverdampfer gefahren. Der im Wesentlichen Hochsieder enthaltende Ablauf des Verdampfers wird aus dem Prozess ausgeschleust und die Wertstoffe enthaltenden Destillate werden in den Prozess recycliert, bevorzugt in die Hochsiederabtrennung B) iv) oder in die Umsetzung des ausgeschleusten Sumpfmaterials mit Alkohol.

In Schritt D) wird Alkoxysilangruppen-haltiges Isocyanat und Nebenprodukt, bevorzugt Alkohol, vom Sumpfmaterial getrennt und aufgefangen. Weiter bevorzugt wird Alkoxysilangruppen-haltiges Isocyanat und Nebenprodukt voneinander getrennt, bevorzugt durch Rektifikation. Bevorzugt wird die Rektifikation bei Temperaturen von 140 - 280 °C, vorzugsweise 160 -260°C, und einem Druck von 0,5 - 200 mbar, vorzugsweise 1 - 100 mbar, durchgeführt. Das erhaltene Isocyanat kann ggf. noch Anteile am zugrundeliegenden Urethan enthalten. Diese Trennung kann beispielsweise in der Spaltkolonne der genannten kombinierten Spalt- und Rektifizierkolonne durchgeführt werden.

Das vorzugsweise durch Rektifikation erhaltene Alkoxysilangruppen enthaltende Isocyanat kann optional durch Destillation bei einer Temperatur von 80 - 220°C, vorzugsweise 100 -200°C und unter einem Druck von 0,5 - 200 mbar, vorzugsweise 1 - 100 mbar, weiter aufgereinigt und als hochreines Produkt isoliert werden. Auch hierbei kann bevorzugt ein Teil des Destillationssumpfes kontinuierlich ausgeschleust und mit dem ausgeschleusten Sumpfmaterial der Spaltung C) kombiniert werden.

Die nach dem Verfahren herstellbaren Isocyanate haben bevorzugt die Formel (3)

R³ₘ(OR²)₃₋ₘSi-R¹-NCO (3)

wobei R³, R² und R¹ unabhängig voneinander gleiche oder verschiedene Kohlenwasserstoffreste mit 1 - 6 C-Atomen bedeuten, wobei diese verzweigt oder cyclisch sein können, oder auch cyclisch ineinander übergehen können, und m gleich bedeutet. Bevorzugt ist m = 0. R¹ ist bevorzugt Propyl. R² ist bevorzugt Methyl oder Ethyl. Ganz besonders bevorzugt sind Verbindungen mit m gleich 0 und R¹ gleich Methyl oder Propyl, und R² gleich Methyl oder Ethyl.

Ganz besonders geeignet ist das erfindungsgemäße Verfahren zur Herstellung von Isocyanatopropyltrimethoxysilan und Isocyanatopropyltriethoxysilan.

Vorteile des erfindungsgemäßen Verfahrens sind insbesondere, dass Alkoxysilangruppen-haltige Isocyanate bei hoher Anlagenverfügbarkeit im kontinuierlichen Betrieb mit hohen Ausbeuten hergestellt werden können. Vorteilhaft beim erfindungsgemäßen Mehrstufenverfahren ist insbesondere die Tatsache, dass bei Einsatz von Alkoxysilanoalkylaminen der Formel (1) als Ausgangsmaterial für die kontinuierliche Herstellung von Alkoxysilangruppen-haltigen Isocyanaten Ablagerungen, die insbesondere durch die von Natur aus höherviskosen Hochsiederkomponenten begünstigt werden, weitgehend vermieden werden können und auch langfristig eine gute Anlagenverfügbarkeit und eine gute Verfahrensausbeute gewährleistet ist. Weiterhin ist es ein Vorteil des erfindungsgemäßen Mehrstufenverfahrens, dass es erlaubt, die Verfahrensausbeute aufgrund der nachgeschalteten thermischen Nachbehandlung - z. B. durch Reaktivdestillation - zusätzlich zu steigern und auf diese Weise eine effizientere Rohstoffnutzung fördert.

Die oben beschriebene optionale Sequenz aus thermischer Nachbehandlung - z. B. durch Reaktivdestillation - der Sumpfausschleusung, Trennung in Wert- und Abfallstoffe, Urethanisierung der Wertstoffe und Rückführung des urethanisierten Wertstoffstroms in den Prozess, kann grundsätzlich auch in der folgenden Reihenfolge durchgeführt werden: Urethanisierung der Sumpfausschleusung, thermische Nachbehandlung, Trennung in Wert- und Abfallstoffe und Rückführung in den Prozess.

Mit dem erfindungsgemäßen mehrstufigen Verfahren zur Herstellung von Alkoxysilangruppen enthaltenden Isocyanaten unter Rückführung und Ausschleusung der Nebenprodukte kann für einen langen Zeitraum ein mit hoher Selektivität störungsfrei kontinuierlich laufender Prozess gewährleistet werden, insbesondere im Falle des Einsatzes von unkonditioniertem Harnstoff und im Falle einer thermischen Nachbehandlung. Das erfindungsgemäße Verfahren eignet sich zur Herstellung von Alkoxysilangruppen enthaltenden Isocyanaten mit 1 - 16 C-Atomen zwischen dem Si-Atom und der Isocyanatgruppe, insbesondere aber zur Herstellung von Isocyanatopropyltrimethoxysilan und Isocyanatopropyltriethoxysilan.

Die hergestellten Alkoxysilangruppen enthaltenden Isocyanate eignen sich für die Anwendung in Beschichtungen auf unterschiedlichen Substraten, Dichtstoffen, Klebstoffen und Elastomermaterialien - oder auch zur gezielten Modifizierung von Harzen oder diskreten Molekülen - ohne allerdings auf diese Einsatzfelder beschränkt zu sein.

Die Erfindung wird durch folgende Beispiele näher erläutert:

### Beispiel 1 : Erfindungsgemäße Herstellung von Isocyantopropyltrimethoxysilan

Der oberste Boden eines Druckdestillationsreaktors wurde stündlich mit 13,9 kg AMMO (Aminopropyltrimethoxysilan), 4,9 kg unkonditioniertem Harnstoff und 10,2 kg Methanol beaufschlagt und die Reaktionsmischung unter kontinuierlicher Entfernung des freigesetzten Ammoniaks bei 220 °C und einer mittleren Verweilzeit von 8,5 h gekocht. Der Reaktoraustrag wurde, zusammen mit dem Stoffstrom aus der Reurethanisierung, durch Flash-Verdampfung bei 250 mbar und anschließender Dünnschichtverdampfung bei 125 °C und 10 mbar von überschüssigem Alkohol und weiteren Leicht- und Mittelsiedern befreit und das erhaltene Roh-Urethan einer weiteren Dünnschichtverdampfung bei 185 °C und 5 mbar unterzogen. Das DSV-Destillat (24,7 kg/h) wurde kontinuierlich in die Wälzung der Spalt- und Rektifizierkolonne gefahren, wobei die Deblockierungsreaktion bei einer Temperatur von 195 °C und einem Sumpfdruck von 60 mbar in Gegenwart einer stationären Konzentration an Zinndichlorid von 16 ppm durchgeführt wurde. Die Spaltgase IPMS und Methanol wurden in zwei hintereinanderliegenden Kondensatoren auskondensiert, wobei das als Kopfprodukt anfallende Methanol nach weiterer Destillation wieder als Rohstoff eingesetzt werden kann, und das IPMS mit einer Reinheit von > 98 % in einer Menge von 15,0 kg/h am Seitenabzug entnommen wurde, was einer kont. Ausbeute von 94 % entspricht. Zur Aufrechterhaltung der Massenbilanz innerhalb der Spalt- und Rektifizierkolonne, Vermeidung von Belegungen und ggf. Verstopfungen der Spaltapparatur, und zur Regenerierung von Wertstoffen wurde kontinuierlich ein Teilstrom aus dem Wälzkreislauf ausgeschleust, und bei 225 °C und 30 mbar über einen Rührkessel mit Destillationsaufsatz in einen Dünnschichtverdampfer (215 °C, 5 mbar) gefahren. Die Destillatströme aus dem Destillationsaufsatz und dem Dünnschichtverdampfer wurden mit Methanol zusammengeführt und der kombinierte Strom (6,5 kg/h) in einem Rohreaktor bei 65 °C bis zur vollständigen Urethanisierung aller NCO-Gruppen umgesetzt. Der Reurethanisatstrom wurde in die Flash-Stufe recycliert.

### Beispiel 2 : Nicht-erfindungsgemäße Herstellung von Isocyantopropyltrimethoxysilan

Der oberste Boden eines Druckdestillationsreaktors wurde stündlich mit 15,5 kg AMMO (Aminopropyltrimethoxysilan), 5,5 kg Harnstoff (Standard) und 11,6 kg Methanol beaufschlagt und die Reaktionsmischung unter kontinuierlicher Entfernung des freigesetzten Ammoniaks bei 220 °C und einer mittleren Verweilzeit von 8,5 h gekocht. Der Reaktoraustrag wurde, zusammen mit dem Stoffstrom aus der Reurethanisierung, durch Flash-Verdampfung bei 250 mbar und anschließender Dünnschichtverdampfung bei 125 °C und 10 mbar von überschüssigem Alkohol und weiteren Leicht- und Mittelsiedern befreit und das erhaltene Roh-Urethan einer weiteren Dünnschichtverdampfung bei 185 °C und 5 mbar unterzogen. Das DSV-Destillat (25,8 kg/h) wurde kontinuierlich in die Wälzung der Spalt- und Rektifizierkolonne gefahren, wobei die Deblockierungsreaktion bei einer Temperatur von 210 °C und einem Sumpfdruck von 75 mbar in Gegenwart einer stationären Konzentration an Zinndichlorid von 30 ppm durchgeführt wurde. Die Spaltgase IPMS und Methanol wurden in zwei hintereinanderliegenden Kondensatoren auskondensiert, wobei das als Kopfprodukt anfallende Methanol nach weiterer Destillation wieder als Rohstoff eingesetzt werden kann, und das IPMS mit einer Reinheit von > 98 % in einer Menge von 15,5 kg/h am Seitenabzug entnommen wurde, was einer kont. Ausbeute von 88 % entspricht. Zur Aufrechterhaltung der Massenbilanz innerhalb der Spalt- und Rektifizierkolonne und zur Regenerierung von Wertstoffen wurde kontinuierlich ein Teilstrom aus dem Wälzkreislauf ausgeschleust, mit Methanol zusammengeführt und der kombinierte Strom (7,8 kg/h) in einem Rohreaktor bei 65 °C bis zur vollständigen Urethanisierung aller NCO-Gruppen umgesetzt. Der Reurethanisatstrom wurde in die Flash-Stufe recycliert.

### Beispiel 3 : Nicht-erfindungsgemäße Herstellung von Isocyantopropyltrimethoxysilan

Der oberste Boden eines Druckdestillationsreaktors wurde stündlich mit 15,1 kg AMMO (Aminopropyltrimethoxysilan), 5,4 kg Harnstoff (Standard) und 11,5 kg Methanol sowie dem Teilstrom aus dem Wälzkreislauf beaufschlagt und die Reaktionsmischung unter kontinuierlicher Entfernung des freigesetzten Ammoniaks bei 220 °C und einer mittleren Verweilzeit von 8,5 h gekocht. Der Reaktoraustrag wurde, zusammen mit dem Stoffstrom aus der Reurethanisierung, durch Flash-Verdampfung bei 250 mbar und anschließender Dünnschichtverdampfung bei 125 °C und 10 mbar von überschüssigem Alkohol und weiteren Leicht- und Mittelsiedern befreit und das erhaltene Roh-Urethan einer weiteren Dünnschichtverdampfung bei 185 °C und 5 mbar unterzogen. Das DSV-Destillat (25,4 kg/h) wurde kontinuierlich in die Wälzung der Spalt- und Rektifizierkolonne gefahren, wobei die Deblockierungsreaktion bei einer Temperatur von 205 °C und einem Sumpfdruck von 70 mbar in Gegenwart einer stationären Konzentration an Zinndichlorid von 35 ppm durchgeführt wurde. Die Spaltgase IPMS und Methanol wurden in zwei hintereinanderliegenden Kondensatoren auskondensiert, wobei das als Kopfprodukt anfallende Methanol nach weiterer Destillation wieder als Rohstoff eingesetzt werden kann, und das IPMS mit einer Reinheit von > 98 % in einer Menge von 15,0 kg/h am Seitenabzug entnommen wurde, was einer kont. Ausbeute von 87 % entspricht. Zur Aufrechterhaltung der Massenbilanz innerhalb der Spalt- und Rektifizierkolonne und zur Regenerierung von Wertstoffen wurde kontinuierlich ein Teilstrom aus dem Wälzkreislauf ausgeschleust, mit Methanol zusammengeführt und der kombinierte Strom (7,3 kg/h) in den Druckdestillationsreaktor zurückgeführt.

## Patentansprüche

1. Verfahren zur Herstellung Alkoxysilangruppen-haltigen Isocyanats, bei dem in der Abfolge der Schritte A) bis D)
A) Alkoxysilanoalkylamin mit Harnstoff in Gegenwart eines Alkohols optional in Gegenwart mindestens eines Katalysators zu Alkoxysilanoalkylurethan umgesetzt,
B) gleichzeitig oder aufeinander folgend
- falls eingesetzt, der Katalysator abgetrennt und/oder deaktiviert, sowie
- Leichtsieder, Mittelsieder, und/oder Hochsieder entfernt,
C) gereinigtes Alkoxysilanoalkylurethan unter Freisetzung von Alkoxysilangruppen-haltigem Isocyanat und Nebenprodukt und unter Verbleib von Sumpfmaterial thermisch gespalten und
D) Alkoxysilangruppen-haltiges Isocyanat und Nebenprodukt voneinander und vom Sumpfmaterial getrennt und aufgefangen wird,
**dadurch gekennzeichnet, dass** in Schritt C)
i) das Sumpfmaterial ganz oder partiell aus der Spaltapparatur ausgeschleust,
ii) thermisch behandelt und/oder aufgereinigt und/oder in Gegenwart von Alkohol einer Nachbehandlung unterzogen und
iii) das entnommene Material nach thermischer Behandlung und/oder Aufreinigung und/oder Nachbehandlung in Schritt B) oder C) erneut zugeführt wird.

2. Verfahren nach einem der vorhergehenden Ansprüche, **dadurch gekennzeichnet, dass** das Alkoxysilanoalkylamin die Formel (1)
R³ₘ(OR²)₃₋ₘSi-R¹-NH₂ (1)
aufweist, wobei R³, R² und R¹ unabhängig voneinander gleiche oder verschiedene Kohlenwasserstoffreste mit 1 - 6 C-Atomen bedeuten, wobei diese linear, verzweigt oder cyclisch sein können, und m gleich bedeutet.

3. Verfahren nach einem der vorhergehenden Ansprüche, **dadurch gekennzeichnet, dass** der eingesetzte Harnstoff unkonditioniert ist.

4. Verfahren nach einem der vorhergehenden Ansprüche, **dadurch gekennzeichnet, dass** der Alkohol die Formel (2) aufweist,
R⁴⁻OH (2)
wobei R⁴ ein linearer, verzweigter oder cyclischer Kohlenwasserstoffrest mit 1 - 6 C-Atomen ist.

5. Verfahren nach einem der vorhergehenden Ansprüche, **dadurch gekennzeichnet, dass** Alkoxysilanoalkylamin mit Harnstoff und Alkohol in einem Molverhältnis dieser drei Komponenten von 1 : 1,01 : 3,0 bis 1 : 1,5 : 10 eingesetzt wird.

6. Verfahren nach einem der vorhergehenden Ansprüche, dass in Schritt A) während der Reaktion entstehender Ammoniak entfernt wird.

7. Verfahren nach einem der vorhergehenden Ansprüche, **dadurch gekennzeichnet, dass** in Schritt
B) in der Abfolge der Schritte i) bis iv)
i) der Katalysator, falls eingesetzt, abgetrennt und/oder deaktiviert,
ii) Leichtsieder über Entspannungsverdampfung,
iii) Mittelsieder über Fallfilmverdampfung oder Dünnschichtverdampfung und
iv) Hochsieder über Kurzwegverdampfung oder Dünnschichtverdampfung abgetrennt werden.

8. Verfahren nach Anspruch 7, **dadurch gekennzeichnet, dass** abgetrennte Leicht- und Mittelsieder in die Urethansynthese A) zurückgeführt werden.

9. Verfahren nach einem der vorhergehenden Ansprüche, **dadurch gekennzeichnet, dass** die thermische Spaltung C) lösemittelfrei und in Gegenwart eine Katalysators bei einer Temperatur von 140 - 280 °C und einem Druck von 0,5 - 200 mbar durchgeführt wird.

10. Verfahren nach Anspruch 9, **dadurch gekennzeichnet, dass** die Katalysatorkonzentration 0,5 - 250 ppm beträgt.

11. Verfahren nach einem der vorhergehenden Ansprüche, **dadurch gekennzeichnet, dass** in Schritt C) eine Menge an Sumpfmaterial entsprechend 1 - 90 Gew.-% bezogen auf den Feed, aus dem Sumpf ausgeschleust und in Schritt B) oder C) wieder zugegeben wird.

12. Verfahren nach einem der vorhergehenden Ansprüche, **dadurch gekennzeichnet, dass** das ausgeschleuste Sumpfmaterial
- bei einer Temperatur von 190 - 290 °C über einen Zeitraum von 0,2 bis 4 h thermisch behandelt und/oder
- bei vermindertem Druck und einer Temperatur von 190 - 290 °C destilliert und/oder
- in Gegenwart eines Alkohols der Formel R²OH mit R² = linearer, verzweigter oder cyclischer Kohlenwasserstoffrest mit 1 - 6- C-Atomen bei 25- 100 °C in Gegenwart oder Abwesenheit eines Katalysators umgesetzt wird.

13. Verfahren nach Anspruch 12, **dadurch gekennzeichnet, dass** keine Umsetzung mit Alkohol durchgeführt wird.

14. Verfahren nach einem der vorhergehenden Ansprüche, **dadurch gekennzeichnet, dass** die Trennung in Schritt D) eine Rektifikation ist.

15. Verfahren nach Anspruch 14, dass das nach der Rektifikation erhaltene Isocyanat zusätzlich destillativ gereinigt wird.

## Claims

1. Process for preparing isocyanate containing alkoxysilane groups, in which, in the sequence of steps A) to D),
A) alkoxysilanoalkylamine is reacted with urea in the presence of an alcohol, optionally in the presence of at least one catalyst, to give alkoxysilanoalkylurethane,
B) simultaneously or successively
- if used, the catalyst is removed and/or deactivated, and
- low boilers, medium boilers and/or high boilers are removed,
C) purified alkoxysilanoalkylurethane is thermally cleaved to release isocyanate containing alkoxysilane groups and by-product, leaving bottoms material, and
D) isocyanate containing alkoxysilane groups and by-product are separated from one another and from the bottoms material and collected,
**characterized in that,** in step C),
i) the bottoms material is wholly or partly discharged from the cleavage apparatus,
ii) subjected to thermal treatment and/or purification and/or an aftertreatment in the presence of alcohol and
iii) the material removed, after thermal treatment and/or purification and/or aftertreatment in step B) or C), is fed in again.

2. Process according to the preceding claim, **characterized in that** the alkoxysilanoalkylamine has the formula (1)
R³ₘ(OR²)₃₋ₘSi-R¹-NH₂ (1)
where R³, R² and R¹ are independently identical or different hydrocarbyl radicals having 1-6 carbon atoms, where these may be linear, branched or cyclic, and m is 0-2.

3. Process according to either of the preceding claims, **characterized in that** the urea used is unconditioned.

4. Process according to any of the preceding claims, **characterized in that** the alcohol has the formula (2)
R⁴-OH (2)
where R⁴ is a linear, branched or cyclic hydrocarbyl radical having 1-6 carbon atoms.

5. Process according to any of the preceding claims, **characterized in that** alkoxysilanoalkylamine is used together with urea and alcohol in a molar ratio of these three components of 1:1.01:3.0 to 1:1.5:10.

6. Process according to any of the preceding claims, **characterized in that**, in step A), ammonia formed during the reaction is removed.

7. Process according to any of the preceding claims, **characterized in that**, in step B), in the sequence of steps i) to iv),
i) the catalyst, if used, is removed and/or deactivated,
ii) low boilers are removed via flash evaporation,
iii) medium boilers are removed via falling-film evaporation or thin-film evaporation and
iv) high boilers are removed via short-path evaporation or thin-film evaporation.

8. Process according to Claim 7, **characterized in that** low and medium boilers removed are recycled into the urethane synthesis A).

9. Process according to any of the preceding claims, **characterized in that** the thermal cleavage C) is conducted without solvent and in the presence of a catalyst at a temperature of 140-280°C and a pressure of 0.5-200 mbar.

10. Process according to Claim 9, **characterized in that** the catalyst concentration is 0.5-250 ppm.

11. Process according to any of the preceding claims, **characterized in that**, in step C), an amount of bottoms material corresponding to 1-90% by weight based on the feed is discharged from the bottom and added again in step B) or C) .

12. Process according to any of the preceding claims, **characterized in that** the discharged bottoms material
- is subjected to thermal treatment at a temperature of 190-290°C over a period of 0.2 to 4 h and/or
- is distilled under reduced pressure and at a temperature of 190-290°C and/or
- is converted in the presence of an alcohol of the formula R²OH with R² = linear, branched or cyclic hydrocarbyl radical having 1-6 carbon atoms at 25-100°C in the presence or absence of a catalyst.

13. Process according to Claim 12, **characterized in that** no reaction with alcohol is conducted.

14. Process according to any of the preceding claims, **characterized in that** the separation in step D) is a rectification.

15. Process according to Claim 14, **characterized in that** the isocyanate obtained after the rectification is additionally purified by distillation.

## Revendications

1. Procédé de fabrication d'un isocyanate contenant des groupes alcoxysilane, selon lequel, dans la succession des étapes A) à D),
A) une alcoxysilanoalkylamine est mise en réaction avec de l'urée en présence d'un alcool, éventuellement en présence d'au moins un catalyseur, pour former un alcoxysilanoalkyluréthane,
B) simultanément ou successivement,
- s'il est utilisé, le catalyseur est séparé et/ou désactivé, et
- des composants de point d'ébullition faible, des composants de point d'ébullition moyen et/ou des composants de point d'ébullition élevé sont séparés,
C) l'alcoxysilanoalkyluréthane purifié est clivé thermiquement pour libérer un isocyanate contenant des groupes alcoxysilane et un produit secondaire et laisser un matériau de fond, et
D) l'isocyanate contenant des groupes alcoxysilane et le produit secondaire sont séparés l'un de l'autre et du matériau de fond et collectés,
**caractérisé en ce que,** dans l'étape C),
i) le matériau de fond est évacué en totalité ou en partie de l'appareil de clivage,
ii) traité thermiquement et/ou purifié et/ou soumis à un traitement secondaire en présence d'un alcool, et
iii) le matériau soutiré est réintroduit après un traitement thermique et/ou une purification et/ou un traitement secondaire dans l'étape B) ou C).

2. Procédé selon l'une quelconque des revendications précédentes, **caractérisé en ce que** l'alcoxysilanoalkylamine présente la formule (1) :
R³ₘ(OR²)₃₋ₘSi-NH₂ (1)
dans laquelle R³, R² et R¹ signifient indépendamment les uns des autres des radicaux hydrocarbonés de 1 à 6 atomes C identiques ou différents, ceux-ci pouvant être linéaires, ramifiés ou cycliques, et m signifie 0 à 2.

3. Procédé selon l'une quelconque des revendications précédentes, **caractérisé en ce que** l'urée utilisée est non conditionnée.

4. Procédé selon l'une quelconque des revendications précédentes, **caractérisé en ce que** l'alcool présente la formule (2) :
R⁴-OH (2)
dans laquelle R⁴ est un radical hydrocarboné linéaire, ramifié ou cyclique de 1 à 6 atomes C.

5. Procédé selon l'une quelconque des revendications précédentes, **caractérisé en ce que** l'alcoxysilanoalkylamine est utilisée avec l'urée et l'alcool en un rapport molaire entre ces trois composants de 1:1,01:3,0 à 1:1,5:10.

6. Procédé selon l'une quelconque des revendications précédentes, **caractérisé en ce que** l'ammoniac formé pendant la réaction dans l'étape A) est éliminé.

7. Procédé selon l'une quelconque des revendications précédentes, **caractérisé en ce que** dans l'étape B) dans la succession des étapes i) à iv),
i) le catalyseur, s'il est utilisé, est séparé et/ou désactivé,
ii) des composants de point d'ébullition faible sont séparés par évaporation par détente,
iii) des composants de point d'ébullition moyen sont séparés par évaporation à film tombant ou évaporation en couche mince, et
iv) des composants de point d'ébullition élevé sont séparés par évaporation à court trajet ou évaporation en couche mince.

8. Procédé selon la revendication 7, **caractérisé en ce que** les composants de point d'ébullition faible et moyen séparés sont recyclés dans la synthèse d'uréthane A) .

9. Procédé selon l'une quelconque des revendications précédentes, **caractérisé en ce que** le clivage thermique C) est réalisé sans solvant et en présence d'un catalyseur à une température de 140 à 280 °C et à une pression de 0,5 à 200 mbar.

10. Procédé selon la revendication 9, **caractérisé en ce que** la concentration du catalyseur est de 0,5 à 250 ppm.

11. Procédé selon l'une quelconque des revendications précédentes, **caractérisé en ce que**, dans l'étape C), une quantité de matériau de fond correspondant à 1 à 90 % en poids par rapport à l'alimentation est évacuée à partir du fond et réintroduite dans l'étape B) ou C).

12. Procédé selon l'une quelconque des revendications précédentes, **caractérisé en ce que** le matériau de fond évacué
- est traité thermiquement à une température de 190 à 290 °C pendant une durée de 0,2 à 4 h et/ou
- est distillé à pression réduite et à une température de 190 à 290 °C et/ou
- est mis en réaction en présence d'un alcool de la formule R²OH avec R² = radical hydrocarboné linéaire, ramifié ou cyclique de 1 à 6 atomes C à 25 à 100 °C en présence ou en l'absence d'un catalyseur.

13. Procédé selon la revendication 12, **caractérisé en ce qu'**aucune réaction avec un alcool n'est réalisée.

14. Procédé selon l'une quelconque des revendications précédentes, **caractérisé en ce que** la séparation à l'étape D) est une rectification.

15. Procédé selon la revendication 14, **caractérisé en ce que** l'isocyanate obtenu après la rectification est en outre purifié par distillation.
